# EUROPEAN PATENT APPLICATION

(11) **EP 3 623 460 A1**
(43) Date of publication of application: **18.03.2020**
(21) Application number: 17909000.6
(22) Date of filing: 09.05.2017
(51) Int. Cl.: C12G 3/00, C12G 3/02, C12G 3/12

(54) **SACCHARIFIED LIQUID, METHOD FOR PRODUCING SACCHARIFIED LIQUID, FOOD AND BEVERAGE, DISTILLED LIQUID FOR WHISKEY, AND WHISKEY**

(71) Applicant: Suntory Holdings Limited, Osaka-shi, Osaka 530-8203 (JP)
(72) Inventor: SATO, Hajime, Osaka 618-0001 (JP); YOMO, Hideko, Osaka 618-0001 (JP); NAKAJIMA, Toshiharu, Kawasaki-shi Kanagawa 211-0067 (JP)
(74) Representative: Vossius & Partner Patentanwälte Rechtsanwälte mbB
(86) International application number: PCT/JP2017/017505
(87) International publication number: WO 2018/207250

(57) **Abstract**

The wort of the present invention is obtained by using unmilled or slightly milled grain as a starch source and saccharifying starch contained in the starch source with a saccharifying enzyme derived from malt.

## Description

### TECHNICAL FIELD

The present invention relates to wort, a method of producing wort, a food or drink product, a distillate for whisky, and whisky.

### BACKGROUND ART

Whisky is roughly classified into two types: malt whisky and grain whisky. Malt whisky is produced from barley malt used as a raw material. The production involves saccharification, fermentation, and single distillation. Grain whisky is produced from corn, rye, wheat, or the like used as a raw material. The production involves cooking (gently boiling a raw material in hot water to soften the raw material), addition of barley malt for saccharification, fermentation, and continuous distillation.

Patent Literature 1 discloses a method of producing whisky in which saccharification of a grain starch material and saccharification of malt are performed separately.

### CITATION LIST

### - Patent Literature

Patent Literature 1: JP H07-298868 A

### SUMMARY OF INVENTION

### - Technical Problem

In Patent Literature 1, grain whose shell has been removed (e.g., milled rice) is used as a starch material, and a saccharifying enzyme such as amylase is provided as a saccharifying enzyme source. The grain whose shell has been removed is mixed with the saccharifying enzyme, and the mixture is cooked to saccharify the starch material, whereby wort is obtained. Separately, milled malt is added to hot water and saccharified to obtain wort under the same conditions as those for saccharification in the production of malt whisky.

The thus-obtained two kinds of wort are mixed, and yeast is added for fermentation, followed by distillation, whereby whisky is produced.

The whisky obtained by this method is considered to have a flavor derived from the two kinds of wort, but the process is complicated because it requires production of two kinds of wort.

In addition to improvement of the above method of producing whisky, development of whisky or food and drink products having more characteristic aroma has been expected.

The present invention was completed in order to solve the problem described above, and aims to provide wort that can be used in the production of whisky or food and drink products having characteristic aroma. The present invention also aims to provide a method of producing wort, which can easily produce the wort. The present invention still also aims to provide a food or drink product or the like that can be obtained from the wort used as a raw material.

### - Solution to Problem

The wort of the present invention is obtained by using unmilled or slightly milled grain as a starch source and saccharifying starch contained in the starch source with a saccharifying enzyme derived from malt.

This wort can be suitably used in the production of whisky and food or drink products that utilize aroma derived from a starch source such as rice.

The unmilled or slightly milled grain as the starch source can be used in the production of whisky or food and drink products having favorable aroma derived from the grain.

In addition, when starch is gelatinized in a steaming step as described later, a method of applying steam to grain placed on a mesh container is preferably used. Yet, this method cannot be used when the grain is milled. Thus, the unmilled or slightly milled grain is used. In addition, more favorable aroma can be obtained by steaming grainy grain than powdered grain. In addition, in the steaming step, an increase in the surface area results in a decrease in aroma components during the step. Thus, also in view of aroma, the grain is unmilled or slightly milled grain.

The wort of the present invention is preferably obtained by using rice as the starch source.

More preferably, the rice is brown rice.

Examples of alcohols produced by using rice include *sake* and *shochu.* These beverages use *koji* as a saccharifying enzyme but not a saccharifying enzyme derived from malt. Wort obtained with a saccharifying enzyme derived from malt and by using rice as a starch source has characteristic aroma derived from the rice and malt, and can be suitably used in the production of whisky or food and drink products having characteristic aroma.

Generally, polished rice is used in the production of usual *sake* and *shochu.* Known alcohol produced using brown rice is one that uses germinated brown rice as a saccharifying enzyme. A saccharifying enzyme derived from malt is not used.

Wort obtained by using brown rice as a starch source and a saccharifying enzyme derived from malt as in the wort of the present invention has characteristics that are not present in wort obtained in the conventional production process of alcohols. The wort of the present invention can be suitably used in the production of whisky or food and drink products having characteristic aroma derived from brown rice and malt.

The wort of the present invention is preferably obtained by using steamed grain as the starch source.

The production process of usual grain whisky includes cooking of milled grain for gelatinization. The cooking is a step of gently boiling grain in hot water to soften the grain, and it is different from the steaming step. The steamed grain has aroma different from that of cooked grain. Thus, the resulting wort can be suitably used in the production of whisky or food and drink products having characteristic aroma derived from the steamed grain.

The wort of the present invention is preferably obtained by gelatinizing starch in the starch source in the steaming step and mixing malt to saccharify the gelatinized starch.

The wort obtained by saccharifying the steamed starch by the saccharifying enzyme derived from malt can be suitably used in the production of whisky or food and drink products having characteristic aroma derived from the steamed grain and malt.

The wort of the present invention is preferably obtained from a mixture in which the ratio of the malt is 10 to 50 parts by weight to the total 100 parts by weight of the starch source and the malt.

When the ratio of the starch source and the malt are in the above range, the aroma derived from the starch source is achieved, and the wort can also be easily produced.

The method of producing wort of the present invention includes saccharifying starch contained in a starch source with a saccharifying enzyme derived from malt, the starch source being unmilled or slightly milled grain.

This method can provide wort that can be suitably used in the production of whisky or food and drink products that utilize aroma derived from a starch source such as rice.

When the unmilled or slightly milled grain is used as the starch source, the starch can be gelatinized in the steaming step by the method that steams grain placed on a mesh container. In addition, more favorable aroma can be obtained by steaming grainy grain than powdered grain.

In the method of producing wort of the present invention, rice is preferably used as the starch source. More preferably, the rice is brown rice.

With the above method, it is possible to obtain wort having characteristic aroma derived from the rice and malt, or wort having characteristic aroma derived from brown rice and malt particularly when brown rice is used.

The method of producing wort of the present invention preferably further includes a steaming step of gelatinizing starch in the starch source.

The steamed grain has aroma different from that of cooked grain. Thus, wort having characteristic aroma derived from the steamed grain can be obtained.

In the method of producing wort of the present invention, preferably, the starch in the starch source is gelatinized in a steaming step, and malt is mixed to saccharify the gelatinized starch.

The steamed starch is saccharified by the saccharifying enzyme derived from malt, whereby wort having characteristic aroma derived from the steamed grain and malt can be obtained.

In the method of producing wort of the present invention, preferably, a mixture of the starch source and the malt is used, and the ratio of the malt in the mixture is 10 to 50 parts by weight to the total 100 parts by weight of the mixture.

When the ratio of the starch source and the malt is in the above range, the aroma derived from the starch source can be achieved, and the wort can also be easily produced.

A food or drink product of the present invention is obtained from the wort of the present invention or the wort obtained by the method of producing wort of the present invention used as a raw material.

The food or drink product of the present invention is preferably an alcoholic beverage obtained by alcoholic fermentation of the wort. The food or drink product is also preferably an alcoholic beverage obtained by distilling an alcoholically fermented liquid obtained by alcoholic fermentation of the wort. The food or drink product is more preferably a distillate for whisky.

The wort of the present invention or the wort obtained by the method of producing wort of the present invention has aroma derived from a starch source such as rice. Thus, a food or drink product obtained from this wort used as a raw material can also have aroma derived from a starch source such as rice. The characteristic aroma can be utilized when the food or drink product is an alcoholic beverage, particularly, a distillate for whisky.

Further, the distillate for whisky is preferably stored and aged in a cask to obtain whisky, and this whisky has characteristic aroma derived from the wort and the distillate for whisky of the present invention.

The distillate for whisky of the present invention is obtained by saccharifying unmilled or slightly milled rice with malt and water to obtain wort, fermenting the wort to obtain an alcohol-containing product, and distilling the alcohol-containing product. A distillate for whisky obtained by such a production method is unknown, and the distillate for whisky of the present invention has characteristic aroma different from that of existing distillates for whisky.

Further, the distillate for whisky is preferably stored and aged in a cask to obtain whisky, and this whisky has characteristic aroma derived from the distillate for whisky of the present invention.

### - Advantageous Effects of Invention

The present invention can provide wort that can be used in the production of whisky or food and drink products having characteristic aroma.

### BRIEF DESCRIPTION OF DRAWINGS

Fig. 1 is a flow chart showing exemplary steps of obtaining wort of the present invention.
Fig. 2 is flow chart showing exemplary steps of obtaining whisky from the wort of the present invention used as a raw material.

### DESCRIPTION OF EMBODIMENTS

The wort of the present invention, the method of producing wort of the present invention, and the like are described below.

The wort of the present invention is obtained by using unmilled or slightly milled grain as a starch source and saccharifying starch contained in the starch source with a saccharifying enzyme derived from malt. The method of producing wort of the present invention uses unmilled or slightly milled grain as a starch source and includes saccharifying starch contained in the starch source with a saccharifying enzyme derived from malt.

A preferred exemplary method of producing the wort of the present invention is described below.

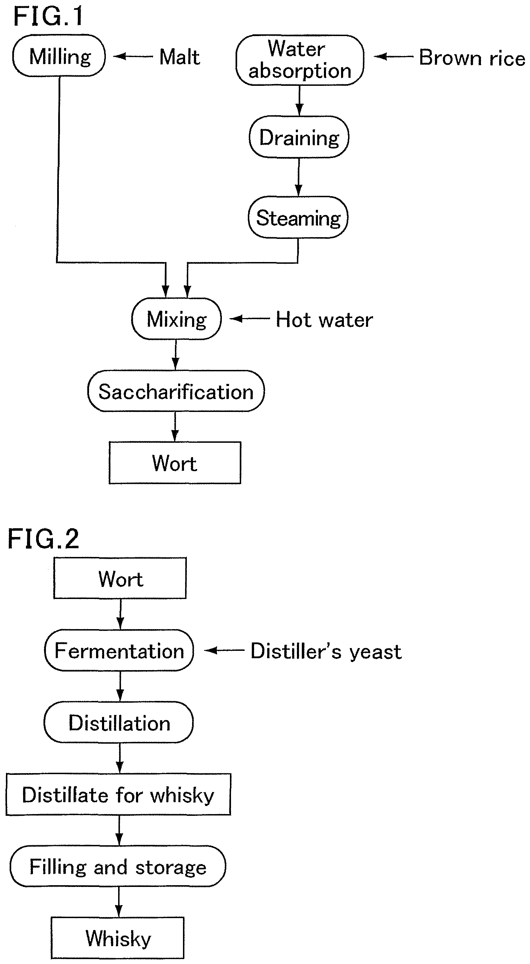

Fig. 1 is a flow chart showing exemplary steps of obtaining wort of the present invention.

### (1) Preparation of malt

Malt usually used in the production of whisky can be suitably used, and is obtained by drying barley germinated by immersion in water.

The malt is preferably milled in a mill (e.g. , roller mill or disk mill). The milling degree is not limited. Unmilled or slightly milled malt can also be used. In view of efficiency of saccharification, use of milled malt is preferred. Unmilled or slightly milled malt can also be used depending on the design of aroma.

### (2) Preparation of starch source

The starch source is unmilled or slightly milled grain. Use of unmilled grain is preferred. It is because use of the unmilled grain is suitable for the steaming step (described later), and favorable flavor is obtained.

The grain may be slightly milled to a degree that does not hinder the steaming step.

The phrase "slightly milled grain" as used herein means that when the grain is sorted through a sieve according to the specifications of a producing device such as a steamer, the amount of the grain remaining on the sieve is 80 wt% or more of the entire amount.

The sieve diameter may be set according to the specifications of the producing device. For example, the sieve diameter can be 1.0 mm or more, for example.

The grain is preferably rice. In addition to rice, grains such as corn, wheat, barley, and oat can be used. When rice is mixed with other grains, the percentage of the rice in the whole grains is preferably 50 to 90 wt%.

The rice is preferably brown rice.

When polished rice is used, the polished rice may be white rice or partially polished rice (e.g., 10% polished rice, 30% polished rice, half-polished rice, or 70% polished rice).

Preferably, the grain is first allowed to absorb water and then the water is drained off. When brown rice is used, preferably, the brown rice is immersed in warm water at 35°C to 45°C for 1.5 to 2.5 hours for water absorption. Then, preferably, the water is drained off for 0.5 to 1.0 hours to remove excess water.

### (3) Steaming step

The steaming step includes steaming grain used as the starch source with moisture and gelatinizing starch in the grain. In the steaming step, a steaming vat or a continuous rice steamer provided with a mesh conveyor can be used. Use of a continuous rice steamer provided with a mesh conveyor is preferred because the grain is unlikely to drop through the mesh when the grain is unmilled or slightly milled. The duration of the steaming step is preferably 0.5 to 1.5 hours.

After the steaming is completed, preferably heat is removed by a means such as air blowing.

### (4) Mixing with malt and saccharification

The starch source obtained by gelatinizing the starch in the steaming step is mixed with the prepared malt and hot water. As for the mixing ratio of the malt and the starch source, the ratio of the malt is preferably 10 to 50 parts by weight to the total 100 parts by weight of the starch source (dry weight before water absorption) and the malt.

The ratio of the malt is more preferably 10 to 35 parts by weight, still more preferably 10 to 20 parts by weight. When the ratio of the malt is in this range, advantageously, the aroma derived from the starch source becomes stronger.

The ratio of the malt is more preferably 25 to 50 parts by weight, still more preferably 40 to 50 parts by weight. When the ratio of the malt is in the above range, saccharification proceeds easily, promoting the production of wort.

In view of balance between strength of the aroma derived from the starch source and easiness of the wort production, the ratio of the malt is preferably the 20 to 40 parts by weight, more preferably 25 to 35 parts by weight.

As for the mixing ratio of the starch source and the hot water, the ratio of the hot water is preferably 400 to 500 parts by weight to the total 100 parts by weight of the starch source (dry weight before water absorption) and the malt.

The temperature of the hot water is preferably 55°C to 70°C.

When the starch source is mixed with malt, the starch is saccharified with a saccharifying enzyme derived from malt, and wort is thus obtained. The duration of saccharification is preferably 1 to 24 hours. During saccharification, the water temperature is preferably maintained at 50°C to 65°C.

The wort of the present invention is obtained by the above step.

The wort of the present invention is obtained by the above method. Yet, it is impossible or impractical to identify, among the components contained in the wort of the present invention, which component contributes to achievement of the effect of the present invention and the amount of the component, with the state of the art at the time of filing of the present application.

A food or drink product of the present invention is obtained from the wort of the present invention or the wort obtained by the method of producing wort of the present invention used as a raw material.

Examples of a drink product as the food or drink product of the present invention include alcoholic beverages and non-alcoholic beverages. Examples of the alcoholic beverages include alcoholic beverages obtained by alcoholic fermentation of wort. Specific examples include fermented liquid (wash), beer, beer-flavored beverages such as low-malt beer and liqueur (effervescent), whisky, spirits, vodka, gin, distilled drinks. A preferred distilled drink is a distillate for whisky. Whisky obtained by storing and aging the distillate for whisky in a cask is also preferred.

Examples of the non-alcoholic beverages include soft drinks such as non-alcoholic beer-flavored beverages, non-alcoholic whisky, and malt beverages.

Examples of the food include powdered beverages, health foods, and food ingredients.

The following describes a method of producing a distillate for whisky and whisky from the wort of the present invention used as a raw material as preferred examples of the food or drink product of the present invention.

Fig. 2 is a flow chart showing exemplary steps of obtaining whisky from the wort of the present invention used as a raw material.

### (5) Fermentation

Distiller's yeast is added to the wort for alcoholic fermentation of the wort. In the fermentation, preferably, the temperature of the wort is first lowered to about 20°C, and the yeast is added for fermentation.

Distiller's yeast to be used in the production of the whisky can be distiller's yeast used in the production of usual whisky. The fermentation period is preferably 1 to 5 days, and a fermented liquid (wash) having an alcohol concentration of about 6 to 9% is obtained by fermentation.

In the present invention, multiple parallel fermentation may be performed. In other words, the production method of the present invention can be one in which saccharification and fermentation are performed simultaneously. The food or drink product of the present invention also encompasses a fermented liquid (wash) obtained by multiple parallel fermentation and a food or drink product containing the fermented liquid.

### (6) Distillation

The wash is placed in a distillation still (wash still) and distilled to obtain a low wine. The low wine and feints are sent to a spirit still for further distillation, whereby the new-make spirit (distillate for whisky) and feints are obtained. The feints can be reused in the second distillation.

The distillation can be performed by a method that is used in the production of usual whisky (e.g., malt whisky or grain whisky). The distillation may be single distillation or continuous distillation.

### (7) Storage

The distillate for whisky obtained in the above step is stored and aged in a cask, whereby whisky can be obtained. The cask for aging and the aging period can be the same as those employed in the production of usual whisky.

The characteristic aroma of the whisky or the food and drink product obtained from the wort of the present invention used as a raw material is achieved by interaction between chemical substances contained therein. It is impossible or impractical to directly identify each chemical substance contributing to the aroma and the amount thereof with the state of the art at the time of filing of the present application.

Novel aroma or rich flavor derived from a starch source such as rice can be added to existing food and drink products by adding the wort of the present invention to the existing food and drink products. Such an aroma adding method is considered to be a method of improving aroma of a food or drink product, or a method of adding rich flavor to a food or drink product.

The whisky obtained from the wort of the present invention used as a raw material has characteristic aroma derived from the wort of the present invention. The whisky can be consumed as a single beverage by itself, but it can also be blended with usual whisky (e.g., malt whisky or grain whisky) to obtain blended whisky. In this manner, it is possible to provide a technique to add novel aroma derived from a starch source such as rice which is unheard of in existing whisky.

### EXAMPLES

Examples that more specifically describe the present invention are described below. The present invention is not limited to these examples.

### <Example 1: Production of the wort of the present invention and whisky from the wort (unmilled brown rice: 51 parts by weight; milled malt: 49 parts by weight)>

Unmilled brown rice (3.2 kg) was immersed in hot water (10 L) at 44°C for 2 hours for water absorption, and the water was drained off for about 1 hour. Then, the brown rice was steamed in a steamer for about 1 hour, whereby the starch was gelatinized. Heat of the steamed brown rice was removed by blowing air, and the brown rice was mixed with milled malt (3.1 kg) and hot water (25 L) at 60°C for saccharification for 16 hours, whereby wort was obtained.

The temperature of the wort was lowered to about 20°C, and the wort was mixed with distiller's yeast for fermentation for 3 days, whereby wash was obtained. The wash was distilled in a wash still, whereby a low wine was obtained. Further, the low wine and feints were distilled in a spirit still, whereby new-make spirit (distillate for whisky) was obtained.

### <Example 2: Production of the wort of the present invention and whisky from the wort (unmilled brown rice: 70 parts by weight; milled malt: 30 parts by weight)>

Unmilled brown rice (4.4 kg) was immersed in hot water (10 L) at 44°C for 2 hours for water absorption, and the water was drained off for about 1 hour. Then, the brown rice was steamed in a steamer for about 1 hour, whereby the starch was gelatinized. Heat of the steamed brown rice was removed by blowing air, and the brown rice was mixed with milled malt (1.9 kg) and hot water (25 L) at 60°C for saccharification for 16 hours, whereby wort was obtained.

The temperature of the wort was lowered to about 20°C, and the wort was mixed with distiller's yeast for fermentation for 3 days, whereby wash was obtained. The wash was distilled in a wash still, whereby a low wine was obtained. Further, the low wine and feints were distilled in a spirit still, whereby new-make spirit (distillate for whisky) was obtained.

### <Example 3: Production of the wort of the present invention and whisky from the wort (unmilled brown rice: 90 parts by weight; milled malt 10 parts by weight)>

Unmilled brown rice (5.67 kg) was immersed in hot water (10 L) at 44°C for 2 hours for water absorption, and the water was drained off for about 1 hour. Then, the brown rice was steamed in a steamer for about 1 hour, whereby the starch was gelatinized. Heat of the steamed brown rice was removed by blowing air, and the brown rice was mixed with milled malt (0.63 kg) and hot water (25 L) at 60°C for saccharification for 16 hours, whereby wort was obtained.

The temperature of the wort was lowered to about 20°C, and the wort was mixed with distiller's yeast for fermentation for 3 days, whereby wash was obtained. The wash was distilled in a wash still, whereby a low wine was obtained. Further, the low wine and feints were distilled in a spirit still, whereby new-make spirit (distillate for whisky) was obtained.

### <Example 4: Production of the wort of the present invention and whisky from the wort (unmilled white rice: 51 parts by weight; milled malt: 49 parts by weight)>

Unmilled white rice (3.2 kg) was immersed in hot water (10 L) at 44°C for 2 hours for water absorption, and the water was drained off for about 1 hour. Then, the white rice was steamed in a steamer for about 1 hour, whereby the starch was gelatinized. Heat of the steamed white rice was removed by blowing air, and the white rice was mixed with milled malt (3.1 kg) and hot water (25 L) at 60°C for saccharification for 16 hours, whereby wort was obtained.

The temperature of the wort was lowered to about 20°C, and the wort was mixed with distiller's yeast for fermentation for 3 days, whereby wash was obtained. The wash was distilled in a wash still, whereby a low wine was obtained. Further, the low wine and feints were distilled in a spirit still, whereby new-make spirit (distillate for whisky) was obtained.

### <Example 5: Production of the wort of the present invention and whisky from the wort (unmilled brown rice: 51 parts by weight; unmilled malt: 49 parts by weight)>

Unmilled brown rice (107 g) was immersed in hot water (0.5 L) at 44°C for 2 hours for water absorption, and the water was drained off for about 1 hour. Then, the brown rice was steamed in a steamer for about 1 hour, whereby the starch was gelatinized. Heat of the steamed brown rice was removed by blowing air, and the brown rice was mixed with unmilled malt (102 g) and hot water (835 mL) at 60°C for saccharification for 16 hours, whereby wort was obtained.

The temperature of the wort was lowered to about 20°C, and the wort was mixed with distiller's yeast for fermentation for 3 days, whereby wash was obtained. The wash was distilled in a glass still, whereby a distillate was obtained.

### <Comparative Example 1: Production of wort from milled brown rice and whisky from the wort (milled brown rice: 51 parts by weight; milled malt: 49 parts by weight)>

Milled brown rice (107 g) was immersed in hot water (0.5 L) at 44°C for 2 hours for water absorption, and the water was drained off for about 1 hour. Then, the brown rice was steamed in a steamer for about 1 hour, whereby the starch was gelatinized. Heat of the steamed brown rice was removed by blowing air, and the brown rice was mixed with milled malt (102 g) and hot water (835 mL) at 60°C for saccharification for 16 hours, whereby wort was obtained.

The temperature of the wort was lowered to about 20°C, and the wort was mixed with distiller's yeast for fermentation for 3 days, whereby wash was obtained. The wash was distilled in a glass still, whereby a distillate was obtained.

### <Comparative Example 2: Production of wort from milled white rice and whisky from the wort (milled white rice: 51 parts by weight; milled malt: 49 parts by weight)>

Milled white rice (107 g) was immersed in hot water (0.5 L) at 44°C for 2 hours for water absorption, and the water was drained off for about 1 hour. Then, the white rice was steamed in a steamer for about 1 hour, whereby the starch was gelatinized. Heat of the steamed white rice was removed by blowing air, and the white rice was mixed with milled malt (102 g) and hot water (835 mL) at 60°C for saccharification for 16 hours, whereby wort was obtained.

The temperature of the wort was lowered to about 20°C, and the wort was mixed with distiller's yeast for fermentation for 3 days, whereby wash was obtained. The wash was distilled in a glass still, whereby a distillate was obtained.

### <Aroma evaluation>

The wort and wash obtained in Examples 1 to 5 and Comparative Examples 1 and 2 were subjected to aroma evaluation. The distillates for whisky obtained in Examples 1 to 4 were also subjected to aroma evaluation.

Further, wort, wash, and a distillate for whisky for use in the production of usual grain whisky and malt whisky were also similarly subjected to aroma evaluation.

The aroma was evaluated by the following method.

Whether or not the product has characteristic aroma derived from rice was evaluated by 10 trained panelists. The evaluation was performed with the following five levels: 5 points: very strong aroma utilizing characteristics of rice; 4 points: strong aroma utilizing characteristics of rice; 3 points: moderate aroma utilizing characteristics of rice; 2 points: slight aroma utilizing characteristics of rice; and 1 point: no aroma utilizing characteristics of rice. Table 1 shows the results (average evaluation point by each panelist) .

For the aroma evaluation, the aroma was relatively evaluated in each of the wort, wash, and distillate for whisky. Even when the aroma in the wort and the aroma in the wash are given the same points, it does not mean that the wort and the wash have similar aroma.

### <Difficulty level of production>

The difficulty level of the production process to produce the wort in each of Examples 1 to 5 and Comparative Examples 1 and 2 was relatively evaluated.

When the ratio of the malt is high, it promotes saccharification, which thus facilitates the wort production.

In addition, use of unmilled grain as the starch source facilitates the steaming step.

In addition, use of milled malt promotes saccharification, which thus facilitates the wort production.

Comprehensively considering the above, the difficulty level of the production was evaluated in three levels : excellent, good, and fair (most easy to least easy). Table 1 shows the results.

**[Table 1]**

| | Grain | Malt | Ratio of malt (parts by weight) | Aroma evaluation | | | Difficulty level of production |
|---|---|---|---|---|---|---|---|
| | | | | Wort | Wash | Distillate for whisky | |
| Example 1 | Unmilled brown rice | Milled malt | 49 | 3 points | 3 points | 3 points | Excellent |
| Example 2 | Unmilled brown rice | Milled malt | 30 | 4 points | 4 points | 4 points | Good |
| Example 3 | Unmilled brown rice | Milled malt | 10 | 5 points | 5 points | 5 points | Fair |
| Example 4 | Unmilled white rice | Milled malt | 49 | 2.5 points | 2.5 points | 2.5 points | Excellent |
| Example 5 | Unmilled brown rice | Unmilled malt | 49 | 2.5 points | 2.5 points | - | Fair |
| Comparative Example 1 | Milled brown rice | Milled malt | 49 | 2 points | 2 points | - | Fair |
| Comparative Example 2 | Milled white rice | Milled malt | 49 | 2 points | 2 points | - | Fair |
| Grain whisky | | | | 1 point | 1 point | 1 point | - |
| Malt whisky | | | | 1 point | 1 point | 1 point | - |

| | | | | | | | |
|---|---|---|---|---|---|---|---|
| * Ratio of malt ratio (parts by weight) of malt to the total 100 parts by weight of grain and malt | | | | | | | |

As shown in Table 1, the characteristic aroma derived from rice, which cannot be sensed with usual whisky, was sensed in each of the wort, wash, and distillate for whisky.

### INDUSTRIAL APPLICABILITY

The present invention can provide wort that can be used in the production of whisky or food and drink products that utilize aroma derived from a starch source such as rice.

## Claims

1. A wort obtained by using unmilled or slightly milled grain as a starch source and saccharifying starch contained in the starch source with a saccharifying enzyme derived from malt.

2. The wort according to claim 1,
wherein the starch source is rice.

3. The wort according to claim 2,
wherein the rice is brown rice.

4. The wort according to any one of claims 1 to 3, obtained by using steamed grain as the starch source.

5. The wort according to any one of claims 1 to 4, obtained by gelatinizing starch in the starch source by steaming, and mixing malt to saccharify the gelatinized starch.

6. The wort according to any one of claims 1 to 5, obtained from a mixture in which the ratio of the malt is 10 to 50 parts by weight to the total 100 parts by weight of the starch source and the malt.

7. A method of producing wort, comprising:
saccharifying starch contained in a starch source with a saccharifying enzyme derived from malt, the starch source being unmilled or slightly milled grain.

8. The method of producing wort according to claim 7,
wherein the starch source is rice.

9. The method of producing wort according to claim 8,
wherein the rice is brown rice.

10. The method of producing wort according to any one of claims 7 to 9, further comprising:
a steaming step of gelatinizing starch in the starch source.

11. The method of producing wort according to any one of claims 7 to 10,
wherein the starch in the starch source is gelatinized in a steaming step, and malt is mixed to saccharify the gelatinized starch.

12. The method of producing wort according to any one of claims 7 to 11,
wherein a mixture of the starch source and the malt is used, and the ratio of the malt in the mixture is 10 to 50 parts by weight to the total 100 parts by weight of the mixture.

13. A food or drink product obtained from the wort according to any one of claims 1 to 6 or the wort obtained by the method of producing wort according to any one of claims 7 to 11 used as a raw material.

14. The food or drink product according to claim 13,
wherein the food or drink product is an alcoholic beverage obtained by alcoholic fermentation of the wort.

15. The food or drink product according to claim 13 or 14,
wherein the food or drink product is an alcoholic beverage obtained by distilling an alcoholically fermented liquid obtained by alcoholic fermentation of the wort.

16. The food or drink product according to claim 15,
wherein the food or drink product is a distillate for whisky.

17. A distillate for whisky, obtained by
saccharifying unmilled or slightly milled rice with malt and water to obtain wort,
fermenting the wort to obtain an alcohol-containing product,
distilling the alcohol-containing product.

18. A whisky obtained by storing the distillate for whisky according to claim 16 or 17 in a cask for aging.
